# EUROPÄISCHE PATENTSCHRIFT

(11) **EP 2 803 155 B1**
(45) Veröffentlichungstag und Bekanntmachung des Hinweises auf die Patenterteilung: **06.04.2016**
(21) Anmeldenummer: 13724149.3
(22) Anmeldetag: 09.04.2013
(51) Int. Cl.: H04J 3/06, H04L 12/40, H04L 1/22, G06F 11/16

(54) **VERFAHREN UND VERMITTLUNGSEINHEIT ZUR ZUVERLÄSSIGEN VERMITTLUNG VON SYNCHRONISATIONSNACHRICHTEN**
METHOD AND SWITCHING DEVICE FOR RELIABLE SWITCHING OF SYNCHRONISATION-MESSAGES
METHODE ET DISPOSITIF DE COMMUTATION POUR UNE COMMUTATION FIABLE DE MESSAGES DE SYNCHRONISATION

(30) Priorität: 11.04.2012 AT 4332012
(43) Veröffentlichungstag der Anmeldung: 19.11.2014
(73) Patentinhaber: FTS Computertechnik GmbH, 1040 Wien (AT)
(72) Erfinder: POLEDNA, Stefan, A-3400 Klosterneuburg (AT)
(74) Vertreter: Patentanwaltskanzlei Matschnig & Forsthuber OG
(86) Internationale Anmeldenummer: PCT/AT2013/050084
(87) Internationale Veröffentlichungsnummer: WO 2013/152379

(56) Entgegenhaltungen:
- EP-A1- 1 717 978
- EP-A2- 0 108 555
- WO-A1-2011/123877
- DE-C1- 4 432 061
- US-A- 4 551 833
- US-A1- 2011 173 347
- JOHN C EIDSON ET AL: "Spider transparent clock", PRECISION CLOCK SYNCHRONIZATION FOR MEASUREMENT, CONTROL AND COMMUNICATION, 2008. ISPCS 2008. IEEE INTERNATIONAL SYMPOSIUM ON, IEEE, PISCATAWAY, NJ, USA, 22. September 2008 (2008-09-22), Seiten 7-11, XP031354114, ISBN: 978-1-4244-2274-6

## Beschreibung

Die Erfindung ein Verfahren zur zuverlässigen Vermittlung von Synchronisationsnachrichten innerhalb eines aus einer Anzahl von Knotenrechnern bestehenden verteilten Computersystems, wobei die Verwaltung einer *Transparent Clock* entsprechend dem IEEE Standard 1588 unterstützt wird. Ein solches Verfahren ist beispielsweise aus der WO 2011/123877 A1 bekannt.

Weiters betrifft die Erfindung einen Apparat zum Durchführen eines solchen Verfahrens.

Die vorliegende Erfindung liegt im Bereich der Computertechnik. Sie beschreibt ein innovatives Verfahren wie die von einer Masteruhr generierten Synchronisationsnachrichten, die dem SAE Standard AS6802 von TT Ethernet und dem IEEE Standard 1588 entsprechen, zuverlässig verteilt werden können, so dass sich in einem auf Ethernet basierten Echtzeitsystem eine physikalische globale Zeitbasis aufbauen lässt.

In einem verteilten Echtzeitsystem, in dem eine Anzahl von Rechnern einen physikalischen Prozess steuert, ist es vorteilhaft, wenn alle Rechner über eine gemeinsame globale Zeitbasis verfügen [8]. Der Aufbau einer solchen globalen Zeitbasis kann durch den Empfang von periodischen Synchronisationsnachrichten erfolgen, die von einer fehlertoleranten Masteruhr gesendet werden. Eine Synchronisationsnachricht beinhaltet in ihrem Datenfeld den Zeitpunkt des Sendens durch die Masteruhr. Beim Empfänger einer Synchronisationsnachricht muss exakt bestimmt werden können, wie lange die Synchronisationsnachricht im Kommunikationssystem verzögert wurde, ehe sie beim Empfänger eingetroffen ist, um den durch die Verzögerung verursachten Zeitfehler beim Empfänger korrigieren zu können. Im SAE Standard AS6802 von TT Ethernet und im IEEE Standard 1588 [10] wird zu diesem Zweck im Datenfeld einer Ethernet Nachricht ein Feld vorgesehen (das *time-interval correction field-TIC* Feld), das von einer konformen Vermittlungseinheit für transparente Uhren modifiziert werden muss, um die Summe der Verzögerungsdauern einer Nachricht in den Vermittlungseinheiten festzuhalten. Wenn während der Modifikation des *TIC Felds* einer Synchronisationsnachricht ein Fehler auftritt, so kann von der Vermittlungseinheit eine fehlerhafte Synchronisationsnachricht ausgesendet werden

Es ist eine Aufgabe der Erfindung, eine zuverlässige Vermittlung von Synchronisationsnachrichten innerhalb eines aus einer Anzahl von Knotenrechnern bestehenden verteilten Computersystems, wobei die Verwaltung einer *Transparent Clock* entsprechend dem IEEE Standard 1588 unterstützt wird.

Diese Aufgabe wird mit einem eingangs erwähnten Verfahren dadurch gelöst, dass erfindungsgemäß eine Vermittlungseinheit aus vier getrennten FCUs besteht, nämlich einem Eingangssystem EIN, zwei unabhängigen Vermittlungssystemen VER1 und VER2, und einem Ausgangssystem AUS, und wobei eine von einem sendenden Knotenrechner bei EIN eintreffende Nachricht unmittelbar unverändert von EIN direkt zu den beiden unabhängigen Vermittlungssystemen VER1 und VER2 weitergeleitet wird, und wobei VER1 das Ereignis des Eintreffens der Nachricht mit einem Zeitstempel versieht, die Nachricht analysiert und zu einem einem Adressfeld der Nachricht zugeordneten Ausgangsport(s) vermittelt, und wobei VER1 die Nachricht öffnet und ein *TIC Feld* innerhalb der Nachricht modifiziert, um die Verzögerungsdauer der Nachricht in VER1 festzuhalten, und wobei VER1 die Nachricht wieder schließt, indem ein CRC Feld der modifizierten Nachricht neu berechnet wird und die geschlossene Nachricht an AUS weiterleitet, und wobei VER2 das Ereignis des Eintreffens der Nachricht mit einem Zeitstempel versieht, die Nachricht analysiert und zu dem dem Adressfeld der Nachricht zugeordneten Ausgangsport(s) vermittelt, und wobei VER2 die Nachricht öffnet und das *TIC Feld* innerhalb der Nachricht modifiziert, um die Verzögerungsdauer der Nachricht in VER2 festzuhalten, und wobei VER2 die Nachricht wieder schließt, indem das CRC Feld der modifizierten Nachricht neu berechnet wird und die geschlossene Nachricht an AUS weiterleitet, und wobei AUS überprüft, ob der Inhalt der von VER1 gelieferten Nachricht mit dem Inhalt der von VER2 gelieferten Nachricht übereinstimmt, und wobei AUS überprüft, ob das Intervall zwischen dem Zeitpunkt des Empfangs der von VER1 gelieferten Nachricht und dem Zeitpunkt des Empfangs der von VER2 gelieferten Nachricht kleiner ist als ein *a priori* festgelegtes erstes Zeitintervall, im Folgenden Zeitintervall_1, und ob der Absolutbetrag der Differenz der in den beiden TIC Feldern gespeicherten Verzögerungswerte kleiner ist als ein *a priori* bekanntes zweites Zeitintervall, im Folgenden Zeitintervall_2, und wobei im Falle, dass eine dieser Überprüfungen negativ ausfällt, AUS das Senden der über die adressierten Ausgangsports auslaufenden Nachricht abbricht oder die auslaufenden Nachricht derart verändert, dass jeder Nachrichtenempfänger die eintreffende Nachricht als fehlerhaft erkennt.

Die vorliegende Erfindung legt ein Verfahren offen, wie eine Vermittlungseinheit für Ethernet Synchronisationsnachrichten aufgebaut werden kann, um einen während der Vermittlung auftretenden Fehler in einer Synchronisationsnachricht erkennen zu können. Von einer solchen *zuverlässigen Vermittlungseinheit* werden entweder richtige oder keine oder erkennbar fehlerhafte Nachrichten ausgesandt. Eine solche zuverlässige Vermittlungseinheit bezeichnen wir *als fail-silent. Bei* Einsatz von zwei parallel arbeitenden *fail-silent* Vermittlungseinheiten kann ein Fehler nicht nur erkannt, sondern auch toleriert werden.

Im Folgenden werden die in diesem Dokument verwendeten Begriffe näher erklärt. Eine Ethernet Nachricht beinhalten einen *Header,* ein *Datenfeld* und ein redundantes *CRC Feld.* In einer richtigen *geschlossenen* Nachricht ist das CRC Feld mit dem Inhalt der Nachricht *konsistent.* Eine Nachricht ist *offen,* wenn kein *konsistentes CRC Feld* existiert. Wenn im Datenfeld einer Nachricht eine Modifikation vorgenommen werden soll, so muss die Nachricht zuerst geöffnet werden. Im Rahmen der Öffnung einer Nachricht wird überprüft, ob der Inhalt der geschlossenen Nachricht mit dem CRC Feld konsistent ist. Wenn dies nicht der Fall ist, wird die Nachricht verworfen. Nach Durchführung der Modifikation im Datenfeld der *offenen* Nachricht muss die Nachricht wieder *geschlossen* werden, d.h., es muss ein neues konsistentes CRC-Feld errechnet werden, ehe die Nachricht weiter gesendet werden darf. Wenn in einer offenen Nachricht eine Modifikation vorgenommen wird, so kann ein während der Modifikation auftretender transienter Fehler (z.B., ein SEU (single event upset) durch die natürliche kosmische Strahlung) einen Fehler in der Nachricht herbeiführen, der auch nach Schließung der Nachricht vorhanden bleibt.

Im Bereich der Computerzuverlässigkeit hat der Begriff einer *Fault-Containment Unit* (FCU) eine zentrale Bedeutung [8, S. 136]. Unter einer *FCU* wird ein abgekapseltes Subsystem verstanden, wobei die unmittelbaren Auswirkungen einer Fehlerursache auf dieses Subsystem eingegrenzt sind.

Bei der Vermittlung von Daten durch eine Vermittlungseinheit wird zwischen dem *store and forward* und dem *cut through* Verfahren unterschieden. Während beim *store and forward* Verfahren die komplette Nachricht in der Vermittlungseinheit gespeichert wird, wird eine Nachricht beim *cut through* Verfahren sofort, ohne Speicherung der gesamten Nachricht in der Vermittlungseinheit, weitergeleitet.

Der Kern der vorliegenden Erfindung besteht darin, dass eine zuverlässige Vermittlungseinheit für IEEE 1588 Synchronisationsnachrichten aus den folgenden vier FCUs aufgebaut wird: einem Eingangssystem EIN, zwei unabhängigen Vermittlungssystemen VER1 und VER2, und einem Ausgangssystem AUS.

Eine bei EIN eintreffende geschlossene Synchronisationsnachricht wird von EIN unverändert und geschlossen an die beiden unabhängigen FCUs VER1 und VER2 weitergeleitet. Die FCU VER1 öffnet die Nachricht, modifiziert das *TIC Feld* (das die Verzögerungsdauer der Nachricht angibt), und schließt die Nachricht bevor sie an das Ausgangssystem AUS weitergeleitet wird. Die FCU VER2 führt die gleichen Verarbeitungsschritte durch wie die FCU VER1. Das Ausgangssystem AUS überprüft ob die Inhalte der von VER1 und VER2 erhaltenen geschlossenen Nachrichten übereinstimmen und sendet die Nachricht an die designierten Empfänger. Falls die Überprüfung der auslaufenden Nachricht einen Fehler erkennt, wird das CRC Feld der auslaufenden Nachricht derart verändert, dass der Empfänger die Nachricht als fehlerhaft erkennt. Da die physikalische Zeit eine analoge Größe ist, darf nicht angenommen werden, dass die Verzögerungsdauern, die von VER1. und VER2 bestimmt werden, auf der digitalen *Bitebene* identisch sind. Es wird angenommen, dass die Verzögerungsdauern übereinstimmen, wenn sich die Werte um weniger als ein *a priori* bekanntes Zeitintervall unterscheiden. Die Felder in den beiden Nachrichten, die von VER1 und VER2 nicht verändert werden, müssen *bitgleich* sein. Aufgrund der möglichen unterschiedlichen Bitmuster in den TIC Feldern können auch die CRC Felder von richtigen Nachrichten unterschiedlich sein. Der vorgeschlagene Aufbau der Vermittlungseinheit stellt sicher, dass jeder physikalische Einzelfehler, der während der Vermittlung in einer der vier FCUs auftritt, erkannt wird.

Die bedeutende Innovation der vorliegenden Erfindung liegt (1) in der nahtlosen Einbindung einer zuverlässigen Uhrensynchronisation in das standardisierte Ethernet Umfeld, ohne in die bestehenden Standards von Ethernet oder TTEthernet [9] oder der IEEE 1588 Uhrensynchronisation [7] eingreifen zu müssen, und (2) in der Erstellung eines *fail-silent Ethernet Switches,* der die geforderte Partitionierung in verteilten sicherheitsrelevanten Echtzeitsystemen auch im Fehlerfall sicherstellt.

Alle bisher bekannten Verfahren der zuverlässigen Uhrensynchronisation basieren auf *nicht Ethernet-Standard* kompatiblen Lösungen. Zum Beispiel behandelt Hall [5] das Problem der Uhrensynchronisation in einem *braided rang,* das ist eine proprietäres zuverlässiges Kommunikationssystem. TTP [2] und FlexRay [4] stellen nicht Ethernet-konforme Lösungen für die fehlertolerante Uhrensynchronisation vor, die auf das Ethernet Umfeld nicht übertragen werden können. Im von Ungermann [6] vorgeschlagenen Verfahren zur Uhrensynchronisation wird das Problem der Fehlerkennung und Fehlertoleranz nicht behandelt. Das Verfahren, Fehler durch den Vergleich der Ergebnisse replizierter FCUs zu erkennen, ist seit mehr als zwanzig Jahren bekannt (siehe z.B. Gunderson [1]) und ist Teil des Standes der Technik [8 p.156] zu betrachten.

Die vorliegende Erfindung legt ein innovatives Verfahren und einen Apparat zur zuverlässigen Vermittlung von Synchronisationsnachrichten entsprechend dem SAE Standard AS6802 von TT Ethernet und dem IEEE Standard 1588 zur Uhrensynchronisation offen. Erfindungsgemäß wird die Vermittlungseinheit aus vier Fault-Containment Units aufgebaut, wobei die nicht replizierten FCUs nur die durch das CRC Polynom geschlossene Nachricht bearbeiten, während die offene Nachricht von zwei replizierten FCUs bearbeitet wird. Durch diesen Aufbau der Vermittlungseinheit ist gewährleistet, dass jeder während der Vermittlung auftretende physikalische Einzelfehler erkannt werden kann. Durch die Anordnung von zwei so arbeitenden Vermittlungseinheiten kann ein fehlertolerantes System aufgebaut werden.

Weiters wird die oben erwähnte Aufgabe mit einem Apparat, insbesondere mit einer Vermittlungseinheit zum Durchführen bzw. zur Verwendung in einem solchen Verfahren gelöst.

Bei einer Ausführungsform des Apparates ist vorgesehen, dass die vier Subsysteme EIN, VER1, VER2, und AUS in unterschiedlichen Chips realisiert sind.

Bei einer anderen Ausführungsform ist vorgesehen, dass die vier Subsysteme EIN, VER1, VER2, und AUS in zwei identischen Chips realisiert werden, wobei die replizierten FCUs auf der Ebene der Hardware synchronisiert werden.

Es kann auch vorgesehen sein, dass die vier Subsysteme EIN, VER1, VER2, und AUS in einem ASIC realisiert sind, oder dass die vier Subsysteme EIN, VER1, VER2, und AUS in einem FPGA realisiert sind.

Weitere vorteilhafte Ausgestaltungen der Erfindung sind wie folgt beschrieben, die zusätzlich, alternativ oder in beliebiger Kombination miteinander realisiert sein können. Dabei kann vorgesehen sein, dass
- ) die Bearbeitung der Nachrichten in der FCU EIN und der FCU AUS nach dem *cut through* Verfahren erfolgt;
- ) die Verarbeitung in VER1 und VER2 zeitlich um einen oder mehrere Takte verschoben ist;
- ) die Darstellung der Daten in VER1 und VER2 unterschiedlich ist;
- ) sowohl in VER1 wie auch in VER2 die Konfigurationsdaten für den zeitgesteuerten Transport von Nachrichten redundant gespeichert sind;
- ) die in VER1 und VER2 gespeicherten Daten mit fehlererkennenden Codes gesichert sind;
- ) die in VER1 und VER2 gespeicherten Daten mit fehlerkorrigierenden Codes gesichert sind;
- ) das Laden der Konfigurationsdaten über ein kryptographisch gesichertes Protokoll erfolgt;
- ) die Verarbeitung in VER1 und VER2 vom gleichen Taktgeber getrieben wird.

Die vorliegende Erfindung wird an Hand der Zeichnung näher erläutert. In dieser zeigt
Fig. 1 ein verteiltes System mit drei Knotenrechnern und zwei Vermittlungseinheiten, und
Fig. 2 den inneren Aufbau einer Vermittlungseinheit.

Das folgende konkrete Beispiel behandelt eine mögliche Realisierung der Erfindung.

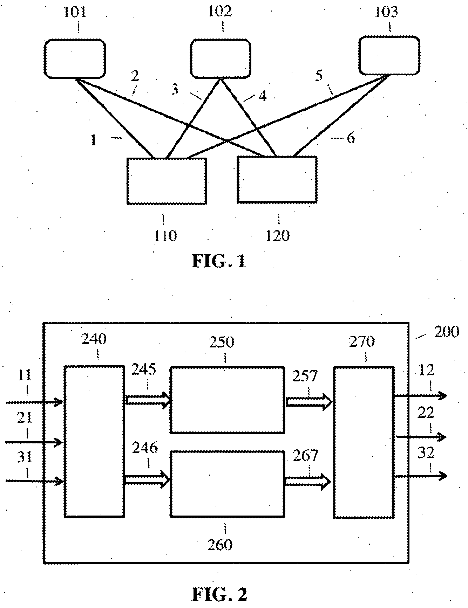

Fig. 1 zeigt ein verteiltes System mit drei Knotenrechner **101, 102,** und **103** und zwei Vermittlungseinheiten **110** und **120.** Die Vermittlungseinheit **110** ist über die bidirektionalen Kommunikationskanäle **1, 2,** und **3** und die Vermittlungseinheit **120** ist über die bidirektionalen Kommunikationskanäle **4, 5,** und **6** mit den entsprechenden Knotenrechnern verbunden. Zwei der drei Knotenrechner, z.B. die Knotenrechner **101** und **102** übernehmen die Funktion eines Zeitmasters und senden periodisch *fail-silent* Ethernet kompatible Synchronisationsnachrichten aus, die im Datenfeld der Nachricht neben dem Zeitpunkt des Sendens entsprechend dem SAE Standard AS6802 von TT Ethernet und/oder dem IEEE 1588 Standard *(Transparent Clock)* ein TIC Feld enthalten, dass die Verzögerung der Nachricht im Kommunikationssystem zwischen dem Sender und Empfänger angibt. Erfindungsgemäß können die Knotenrechner über ein Netzwerk mit mehreren Vermittlungseinheiten kommunizieren.

Fig. 2 zeigt den inneren Aufbau der Vermittlungseinheit **110.** In Fig. 2 sind die drei bidirektionalen Kommunikationskanäle **1, 2,** und **3** von **110** (Fig. 1) in je zwei unidirektionale Kommunikationskanäle aufgespalten. So stellt der Kommunikationskanal **11** den Eingangskanal **1** zur Vermittlungseinheit und der Kommunikationskanal **12** den Ausgangskanal **1** von der Vermittlungseinheit dar. Entsprechend stellt **21** den Eingangskanals von **2** und **22** den Ausgangskanal von Kanal **2** und **31** den Eingangskanals **von 3** und **32** den Ausgangskanal von Kanal **3** aus Fig. 1 dar. In der Vermittlungseinheit **110** befinden sich **4** FCUs. Es sind dies das Eingangssystem EIN **240,** die Vermittlungssysteme VER1 **250** und VER2 **260** und das Ausgangssystem **270.** Das Eingangssystem EIN **240** ist über den Kommunikationskanal **245** mit dem Vermittlungssysteme VER1 **250** und über den Kommunikationskanal **246** mit dem Vermittlungssysteme VER1 **260** verbunden. Das Vermittlungssystem VER1 **250** ist über den Ausgangskanal **257** und das Vermittlungssystem VER2 **260** ist über den Ausgangskanal **267** mit dem Ausgangssystem AUS **270** verbunden. Die inneren Kommunikationskanäle **245, 246, 257** und **267,** die innerhalb der Vermittlungseinheit **110** zu finden sind, sind so ausgelegt dass sie auch bei Hochlast-d.i. auf allen drei Eingangskanälen **11,21,** und **31** treffen gleichzeitig Nachrichten ein-ein deterministisches (siehe [8], p.125) Verhalten aufweisen.

Eine *geschlossenene Synchronisationsnachricht,* die auf einem der Eingangskanäle, z.B. dem Kanal **11,** eintrifft wird vom Eirigangssystem EIN **240** ohne sie zu öffnen im *cut through* Verfahren so schnell wie technisch möglich über die Kanäle **245** und **246** an die beiden unabhängigen FCUs VER1 **250** und VER2 **260** weitergeleitet. Die FCU **250** erfasst den Zeitpunkt des Eintreffens der Nachricht und überprüft die Konsistenz zwischen dem Inhalt und dem CRC der *geschlossenen* Nachricht. Wenn die Konsistenz nicht gegeben ist, so wird die Nachricht verworfen. Wenn die Konsistenz gegeben ist wird die Nachricht geöffnet, die geforderte Vermittlung durchgeführt und entsprechend dem IEEE 1588 Standard das *TIC Feld,* das die Verzögerung der Nachricht zwischen Sender und Empfänger angibt, auf den neuen Stand gebracht. Anschießend wird die Nachricht von der FCU **250** geschlossen indem das neue CRC berechnet wird. Die nun geschlossene Nachricht wird über den Kanal **257** an die FCU AUS **270** zur sofortigen Ausgabe an den adressierten Empfänger weitergeleitet. Die FCU AUS **270** erfasst den Zeitpunkt des Eintreffens der Nachricht von der FCU 250. Die FCU VER2 **260** führt die gleichen Verarbeitungsschritte wie die FCU VER1 **250** parallel zu FCU **250** aus. Da beide FCUs, VER1 **250** und VER2 **260 die** gleichen Verarbeitungsschritte nahezu gleichzeitig durchführen werden im fehlerfreien Fall die beiden Ausgangsnachrichten innerhalb eines *a priori* bestimmten *Zeitintervall_1* bei AUS **270** eintreffen. Wenn AUS feststellt, dass der Absolutbetrag der Differenz der Zeitpunkte des Beginns des Empfangs der Ausgangsnachrichten von VER1 **250** und VER2 **260** innerhalb des *Zeitintervalls_1* liegen so beginnt AUS **270** sofort mit der Übertragung der Nachricht an den designierten Empfänger im *cut through* Verfahren. Sobald die TIC Felder der beiden Nachrichten von VER 250 und VER2 **260** bei AUS **270** ankommen überprüft AUS 270 ob die beiden TIC Felder übereinstimmen. Die Übereinstimmung der TIC Felder ist gegeben, wenn der Absolutbetrag der Differenz der Werte in den beiden TIC Felder kleiner ist als *Zeitintervall_2.* Die Länge des *Zeitintervall_1* und des *Zeitintervalls_2* wird bestimmt durch den Digitalisierungsfehler der Zeitdarstellung und den unterschiedlichen Verarbeitungsdauern in den FCUs VER1 **250** und VER2 **260** bedingt durch die unterschiedlichen Oszillatorfrequenzen in den FCUs VER1 **250** und VER2 **260.** Wenn die Übereinstimmung nicht gegeben ist, also ein Fehler entdeckt wurde, so bricht AUS **270** die laufende Übertragung ob oder ändert das CRC Feld der auslaufenden Nachricht so dass jeder Empfänger die Nachricht als fehlerhaft erkennen kann. Im Anschluss sendet AUS **270** eine Fehlermeldung in der der Grund des Abbruchs dokumentiert wird, an einen Monitor Rechner.

Entsprechend der Definition einer FCU wird angenommen, dass ein Fehler, der in einer der 4 FCUs auftritt, keine *unmittelbaren* Auswirkungen auf die anderen drei FCUs hat. Wenn in einer der vier FCUs **240, 250, 260** oder **270** der Vermittlungseinheit **110** während der Vermittlung ein Fehler auftritt, so wird der Fehler wie folgt erkannt. In den FCUs **240** und **270** werden nur *geschlossene* Nachrichten bearbeitet. Ein Fehler in einer geschlossenen Nachricht wird durch die Überprüfung der Nachricht mittels des in der Nachricht enthaltenen CRC Felds erkannt. Wenn während der Bearbeitung der *offenen* Nachricht durch die FCU VER1 **250** oder die FCU VER2 **260** auftritt, so erkennt die FCU AUS **270** den Fehler durch Vergleich der von den beiden unabhängigen FCUs **250** und **260** eintreffenden Nachrichten.

Um zu verhindern, dass im Fehlerfall eine unterschiedlich lange Zwischenspeicherung der Nachrichten in der FCU EIN und der FCU AUS erfolgt, werden die Nachrichten in der FCU EIN und der FCU AUS nach dem *cut through* Verfahren verarbeitet. Dadurch ist eine konstante bekannte Verzögerungszeit in diesen beiden FCUs durch den Entwurf gewährleistet.

Um die Wahrscheinlichkeit herabzusetzen, dass dieselbe Fehlerursache (z.B. eine Störung in der Stromversorgung oder ein Blitzschlag) gleiche Fehler in den FCUs **250** und **260** hervorruft, kann die Verarbeitung der Nachrichten in den FCUs **250** und **260** um einige Takte verschoben und eine diverse Darstellung der Informationen in FCUs **250** und **260** gewählt werden.

Wenn die Nachrichten nach dem TTEthernet Verfahren (SAE Standard AS6802 von TT Ethernet) vermittelt werden sollen, so müssen in der FCU **250** und der FCU **260** Konfigurationsdaten gespeichert werden. Erfindungsgemäß werden diese Konfigurationsdaten in der FCU **250** und der FCU **260** fehlererkennend oder fehlerkorrigierend codiert, so dass die Folgen eines Speicherfehlers erkannt bzw. korrigiert werden können. Alternativ können die Konfigurationsdaten in FCU **250** und FCU **260** redundant gespeichert werden. Das Laden der Konfigurationsdaten in die FCU **250** und die FCU **260** erfolgt mittels kryptographisch gesicherter Übertragungsprotokolle [8, S.141].

Die Implementierung des beschriebenen Verfahrens zur Vermittlung von Synchronisationsnachrichten kann auf unterschiedliche Weise erfolgen. Um die Fault Containment Eigenschaft zu optimieren, kann die Implementierung auf vier unterschiedlichen Chips erfolgen, so dass jede FCU in einem eigenen Chip mit eigenem Taktgeber realisiert ist.

Es ist auch möglich das beschriebene Verfahren in zwei identischen Chips zu realisieren, wobei jeder der beiden Chips die FCUs EIN, VER, und AUS beinhaltet und die replizierten FCUs jeweils synchronisiert arbeiten.

In einer weiteren Implementierungsvariante sind alle vier FCUs in einem einzigen ASIC oder einem einzigen FPGA Chip angeordnet. Wenn nur ein einziger Chip verwendet wird, dann können die Takte von einem einzigen oder von mehreren Taktgebern abgeleitet werden. Die Dauer der vorab eingeführten Zeitintervalle *Zeitintervall_1* und *Zeitintervall_2* hängen von der gewählten Implementierungsstrategie ab.

### Zitierte Literatur:

[1] US 4,417,334 Gunderson et al. *Data processing system having dual*-*channel system bus.* Granted Nov. 22, 1983.
[2] US 5,694,542 Kopetz, H. *Time-triggered communication control unit and communication method.* Granted December 2,1997.
[3] US 7,839,868. Kopetz, H. *Communication method and system for the transmission of time-driven and event-driven Ethernet messages.* Granted November 23, 2010.
[4] US 7,349,512 Rausch et al. *Clock synchronisation in a distributed system.* Granted March 25, 2008.
[5] US 7,912,094 Hall, et al. *Self-checking pair-based master*/*follower clock synchronization*. Granted March 22, 2011.
[6] US 8,089,991 Ungermann. *Network and method for clock synchronization of clusters in a time triggered network.* Granted January 3, 2012.
[7] Eidson, J.C. Measuretnent, Control and Communication Using IEEE 1588, (Springer Verlag 2006
[8] Kopetz, H. Real-Time Systems, Design Principles for Distributed Embedded Applications. Springer Verlag. 2011.
[9] SAE Standard AS6802 von TT Ethernet. URL: http://standards.sae.org/as6802
[10] IEEE 1588 *Standard for a Precision Clock Synchronization Protocol for Network Measurement and Control Systems.* URL: http://www.ieee1588.com/

## Patentansprüche

1. Verfahren zur zuverlässigen Vermittlung von Synchronisationsnachrichten innerhalb eines aus einer Anzahl von Knotenrechnern bestehenden verteilten Computersystems, wobei die Verwaltung einer *Transparent* Clock entsprechend dem IEEE Standard 1588 unterstützt wird,
**dadurch gekennzeichnet, dass**
eine Vermittlungseinheit aus vier getrennten Fault Containment Units, FCU, besteht, nämlich einem Eingangssystem EIN, zwei unabhängigen Vermittlungssystemen VER1 und VER2, und einem Ausgangssystem AUS,
und wobei eine von einem sendenden Knotenrechner bei EIN eintreffende Nachricht unmittelbar unverändert von EIN zu den beiden unabhängigen Vermittlungssystemen VER1 und VER2 weitergeleitet wird, und wobei VER1 das Ereignis des Eintreffens der Nachricht mit einem Zeitstempel versieht, die Nachricht analysiert und zu einem einem Adressfeld der Nachricht zugeordneten Ausgangsport oder Ausgangsparts vermittelt, und wobei VER1 die Nachricht öffnet und ein Feld innerhalb der Nachricht, im Folgenden als *TIC Feld* bezeichnet, modifiziert, um die Verzögerungsdauer der Nachricht in VER1 festzuhalten, und wobei VER1 die Nachricht wieder schließt, indem ein CRC Feld der modifizierten Nachricht neu berechnet wird und die geschlossene Nachricht an AUS weiterleitet, und wobei VER2 das Ereignis des Eintreffens der Nachricht mit einem Zeitstempel versieht, die Nachricht analysiert und zu dem dem Adressfeld der Nachricht zugeordneten Ausgangsport oder Ausgangsparts vermittelt, und wobei VER2 die Nachricht öffnet und das *TIC Feld* innerhalb der Nachricht modifiziert, um die Verzögerungsdauer der Nachricht in VER2 festzuhalten, und wobei VER2 die Nachricht wieder schließt, indem das CRC Feld der modifizierten Nachricht neu berechnet wird und die geschlossene Nachricht an AUS weiterleitet, und wobei AUS überprüft, ob der Inhalt der von VER1 gelieferten Nachricht mit dem Inhalt der von VER2 gelieferten Nachricht übereinstimmt, und wobei AUS überprüft, ob das Intervall zwischen dem Zeitpunkt des Empfangs der von VER1 gelieferten Nachricht und dem Zeitpunkt des Empfangs der von VER2 gelieferten Nachricht kleiner ist als ein *a priori* festgelegtes erstes Zeitintervall, im Folgenden Zeitintervall_1, und ob der Absolutbetrag der Differenz der in den beiden TIC Feldern gespeicherten Verzögerungswerte kleiner ist als ein *a priori* bekanntes zweites Zeitintervall, im Folgenden Zeitintervall_2, und wobei im Falle, dass eine dieser Überprüfungen negativ ausfällt, AUS das Senden der über die adressierten Ausgangsports auslaufenden Nachricht abbricht oder die auslaufenden Nachricht derart verändert, dass jeder Nachrichtenempfänger die eintreffende Nachricht als fehlerhaft erkennt.

2. Verfahren nach Anspruch 1, **dadurch gekennzeichnet, dass** die Bearbeitung der Nachrichten in der FCU EIN und der FCU AUS nach dem *cut through* Verfahren erfolgt.

3. Verfahren nach Anspruch 1, **dadurch gekennzeichnet, dass** die Verarbeitung in VER1 und VER2 zeitlich um einen oder mehrere Takte verschoben ist.

4. Verfahren nach einem der Ansprüche 1 bis 3, **dadurch gekennzeichnet, dass** die Darstellung der Daten in VER1 und VER2 unterschiedlich ist.

5. Verfahren nach einem der Ansprüche 1 bis 4, **dadurch gekennzeichnet, dass** sowohl in VER1 wie auch in VER2 die Konfigurationsdaten für den zeitgesteuerten Transport von Nachrichten redundant gespeichert sind.

6. Verfahren nach einem der Ansprüche 1 bis 5, **dadurch gekennzeichnet, dass** die in VER1 und VER2 gespeicherten Daten mit fehlererkennenden Codes gesichert sind.

7. Verfahren nach einem der Ansprüche 1 bis 6, **dadurch gekennzeichnet, dass** die in VER1 und VER2 gespeicherten Daten mit fehlerkorrigierenden Codes gesichert sind.

8. Verfahren nach einem der Ansprüche 5 bis 7, **dadurch gekennzeichnet, dass** das Laden der Konfigurationsdaten über ein kryptographisch gesichertes Protokoll erfolgt.

9. Verfahren nach einem der Ansprüche 1 bis 8, **dadurch gekennzeichnet, dass** die Verarbeitung in VER1 und VER2 vom gleichen Taktgeber getrieben wird.

10. Apparat zum Durchführen eines Verfahrens nach einem der Ansprüche 1 bis 9.

11. Apparat nach Anspruch 10, **dadurch gekennzeichnet, dass** die vier Subsysteme EIN, VER1, VER2, und AUS in unterschiedlichen Chips realisiert sind.

12. Apparat nach Anspruch 10, **dadurch gekennzeichnet, dass** die vier Subsysteme EIN, VER1, VER2, und AUS in zwei identischen Chips realisiert werden, wobei die replizierten FCUs auf der Ebene der Hardware synchronisiert werden.

13. Apparat nach Anspruch 10, **dadurch gekennzeichnet, dass** die vier Subsysteme EIN, VER1, VER2, und AUS in einem ASIC realisiert sind.

14. Apparat nach Anspruch 10, **dadurch gekennzeichnet, dass** die vier Subsysteme EIN, VER1, VER2, und AUS in einem FPGA realisiert sind.

15. Verteiltes Computersystem mit einem Apparat nach einem der Ansprüche 10 bis 14.

## Claims

1. A method for the reliable switching of synchronisation messages in a distributed computer system consisting of a number of node computers, wherein the management of a *transparent clock* conforming to IEEE Standard 1588 is supported,
**characterised in that**
a switching unit consists of four separate Fault Containment Units, FCU, specifically an input system EIN, two independent switching systems VER1 and VER2, and an output system AUS,
and wherein a message arriving at EIN from a transmitting node computer is forwarded immediately in unmodified form from EIN directly to the two independent switching systems VER1 and VER2, and wherein VER1 provides the event of the arrival of the message with a timestamp, analyses the message and switches said message to an output port or output ports associated with an address field of the message, and wherein VER1 opens the message and modifies a field within the message, in the following called TIC field, in order to determine the delay period of the message in VER1, and wherein VER1 closes the message again by re-calculating a CRC field of the modified message and forwarding the closed message to AUS, and wherein VER2 provides the event of the arrival of the message with a timestamp, analyses the message and switches said message to the output port or the output ports associated with the address field of the message, and wherein VER2 opens the message and modifies the *TIC field* within the message in order to determine the delay period of the message in VER2, and wherein VER2 closes the message again by re-calculating the CRC field of the modified message and forwarding the closed message to AUS, and wherein AUS checks whether the content of the message delivered from VER1 matches the content of the message delivered from VER2, and wherein AUS checks whether the interval between the moment of receipt of the message delivered from VER1 and the moment of receipt of the message delivered from VER2 is smaller than a first interval determined *a priori,* referred to hereinafter as the interval_1, and whether the absolute value of the difference of the delay values stored in the two TIC fields is smaller than a second interval known *a priori,* referred to hereinafter as the interval_2, and wherein, in the case that one of these checks is negative, AUS interrupts the transmission of the message that is outbound via the addressed output ports or changes the outbound message in such a way that each message receiver identifies the incoming message as faulty.

2. The method according to Claim 1, **characterised in that** the messages are processed in the FCU EIN and the FCU AUS by the *cut through* method.

3. The method according to Claim 1, **characterised in that** the processing in VER1 and VER2 is shifted over time by one or more cycles.

4. The method according to one of Claims 1 to 3, **characterised in that** the presentation of data in VER1 and VER2 is different.

5. The method according to one of Claims 1 to 4, **characterised in that** the configuration data for the time-controlled transport of messages is stored redundantly both in VER1 and in VER2.

6. The method according to one of Claims 1 to 5, **characterised in that** the data stored in VER1 and VER2 is secured with fault-identifying codes.

7. The method according to one of Claims 1 to 6, **characterised in that** the data stored in VER1 and VER2 is secured with fault-correcting codes.

8. The method according to one of Claims 5 to 7, **characterised in that** the configuration data is loaded via a cryptographically secured protocol.

9. The method according to one of Claims 1 to 8, **characterised in that** the processing in VER1 and VER2 is driven by the same clock.

10. An apparatus for carrying out a method according to one of Claims 1 to 9.

11. The apparatus according to Claim 10, **characterised in that** four sub-systems EIN, VER1, VER2 and AUS are provided in different chips.

12. The apparatus according to Claim 10, **characterised in that** the four sub-systems EIN, VER1, VER2 and AUS are provided in two identical chips, wherein the replicated FCUs are synchronised at hardware level.

13. The apparatus according to Claim 10, **characterised in that** the four sub-systems EIN, VER1, VER2 and AUS are provided in an ASIC.

14. The apparatus according to Claim 10, **characterised in that** the four sub-systems EIN, VER1, VER2 and AUS are provided in an FPGA.

15. A distributed computer system comprising an apparatus according to one of Claims 10 to 14.

## Revendications

1. Procédé de commutation fiable de messages de synchronisation à l'intérieur d'un système informatique réparti consistant en une pluralité d'ordinateurs de noeud, dans lequel la gestion d'une horloge transparente *(Transparent Clock)* conformément à la norme IEEE 1588 est supportée,
**caractérisé par le fait que**
une unité de commutation comporte quatre Unités de Confinement des Erreurs, FCU, séparées, à savoir un système d'entrée EIN, deux systèmes de commutation indépendants VER1 et VER2 et un système de sortie AUS,
et dans lequel un message en provenance d'un ordinateur de noeud émetteur à EIN est transféré immédiatement inchangé de EIN aux deux systèmes de commutation indépendants VER1 et VER2, et dans lequel VER1 dote l'évènement de l'arrivée du message d'un horodatage, analyse le message et transmet à un ou des ports de sortie associés à un champ d'adresse du message, et dans lequel VER1 ouvre le message et modifie un champ à l'intérieur du message, dénommé *champ TIC* dans ce qui suit, afin de consigner le temps de retard du message dans VER1, et dans lequel VER1 referme le message, un champ CRC du message modifié étant recalculé et le message fermé étant transféré à AUS, et dans lequel VER2 dote l'évènement de l'arrivée du message d'un horodatage, analyse le message et transmet au ou aux ports de sortie associés au champ d'adresse du message, et dans lequel VER2 ouvre le message et modifie le *champ TIC* à l'intérieur du message, afin de consigner le temps de retard du message dans VER2, et dans lequel VER2 referme le message, le champ CRC du message modifié étant recalculé et le message fermé étant transféré à AUS, et dans lequel AUS vérifie si le contenu du message fourni par VER1 correspond au contenu du message fourni par VER2, et dans lequel AUS vérifie si l'intervalle entre l'instant de la réception du message fourni par VER1 et l'instant de la réception du message fourni par VER2 est plus petit qu'un premier intervalle de temps *a priori* fixe, Zeitintervall_1 dans ce qui suit, et si la valeur absolue de la différence des valeurs de retard stockées dans les deux champs TIC est inférieure à un second intervalle de temps *a priori* connu, Zeitintervall_2 dans ce qui suit, et dans lequel, dans le cas où l'une de ces vérifications est négative, AUS interrompt l'envoi du message sortant par l'intermédiaire des ports de sortie adressés ou modifie le message sortant de telle sorte que chaque destinataire du message reconnaît le message entrant comme défectueux.

2. Procédé selon la revendication 1, **caractérisé par le fait que** le traitement des messages dans la FCU EIN et la FCU AUS a lieu après le procédé de transfert direct.

3. Procédé selon la revendication 1, **caractérisé par le fait que** le traitement dans VER1 et VER2 est décalé dans le temps d'un ou plusieurs cycles.

4. Procédé selon l'une des revendications 1 à 3, **caractérisé par le fait que** la représentation des données dans VER1 et VER2 est différente.

5. Procédé selon l'une des revendications 1 à 4, **caractérisé par le fait que** les données de configuration pour le transport contrôlé dans le temps de messages sont stockées de manière redondante à la fois dans VER 1 et dans VER2.

6. Procédé selon l'une des revendications 1 à 5, **caractérisé par le fait que** les données stockées dans VER1 et VER2 sont sécurisées avec des codes de détection d'erreurs.

7. Procédé selon l'une des revendications 1 à 6, **caractérisé par le fait que** les données stockées dans VER1 et VER2 sont sécurisées avec des codes de correction d'erreurs.

8. Procédé selon l'une des revendications 5 à 7, **caractérisé par le fait que** le chargement des données de configuration a lieu par l'intermédiaire d'un protocole sécurisé par cryptographie.

9. Procédé selon l'une des revendications 1 à 8, **caractérisé par le fait que** le traitement dans VER1 et VER2 est commandé par le même générateur d'horloge.

10. Appareil pour mettre en oeuvre un procédé selon l'une des revendications 1 à 9.

11. Appareil selon la revendication 10, **caractérisé par le fait que** les quatre sous-systèmes EIN, VER1, VER2 et AUS sont réalisés dans des puces différentes.

12. Appareil selon la revendication 10, **caractérisé par le fait que** les quatre sous-systèmes EIN, VER1, VER2 et AUS sont réalisés dans deux puces identiques, les FCU répliquées étant synchronisées au niveau matériel.

13. Appareil selon la revendication 10, **caractérisé par le fait que** les quatre sous-systèmes EIN, VER1, VER2 et AUS sont réalisés dans un ASIC.

14. Appareil selon la revendication 10, **caractérisé par le fait que** les quatre sous-systèmes EIN, VER1, VER2 et AUS sont réalisés dans un FPGA.

15. Système informatique réparti comportant un appareil selon l'une des revendications 10 à 14.
